# EUROPEAN PATENT APPLICATION

(11) **EP 4 729 272 A1**
(43) Date of publication of application: **22.04.2026**
(21) Application number: 24845764.0
(22) Date of filing: 29.05.2024
(51) Int. Cl.: B29C 45/32, B29C 45/33, B29C 45/37, B29C 33/30, B29C 33/76, B29C 33/58, B29C 45/36

(54) **MOLD COMPRISING DEFORMABLE CORES**

(30) Priority: 26.07.2023 KR 20230097320; 07.08.2023 KR 20230102944
(71) Applicant: Samsung Electronics Co., Ltd., Suwon-si, Gyeonggi-do 16677 (KR)
(72) Inventor: KIM, Minkyu, Suwon-si Gyeonggi-do 16677 (KR); KIM, Jinchul, Suwon-si Gyeonggi-do 16677 (KR); CHOI, Hyunsuk, Suwon-si Gyeonggi-do 16677 (KR); KIM, Jonghyun, Suwon-si Gyeonggi-do 16677 (KR); LEE, Sangwook, Suwon-si Gyeonggi-do 16677 (KR); JEON, Jindeuk, Suwon-si Gyeonggi-do 16677 (KR)
(74) Representative: Walaski, Jan Filip
(86) International application number: PCT/KR2024/007277
(87) International publication number: WO 2025/023460

(57) **Abstract**

A mold for manufacturing a molded product by using a molten material, according to one embodiment of the present disclosure, may comprise: a first core for providing an accommodation space with one open side; a second core at least partially accommodated in the accommodation space, and disposed in the first core so as to be able to linearly move back and forth in a first direction; and a third core which moves in the first direction so as to be coupled to face at least the second core from among the first core and the second core, and which is coupled to the second core so as to form a cavity corresponding to the shape of the molded product to be manufactured. In one embodiment, the second core can provide a first sub-cavity having a first shape corresponding to at least a portion of the cavity when the second core is coupled to the third core and accommodated in the accommodation space, and can provide a second sub-cavity having a second shape that differs from the first shape while the second core deviates from at least a portion of the accommodation space when separated from the third core. Other various embodiments are possible.

## Description

### [Technical Field]

The embodiment(s) of the disclosure relate to a mold, for example, a mold for manufacturing molded products using molten materials.

### [Background Art]

Injection molding is one of the manufacturing methods that manufactures injection-molded products having a shape corresponding to a molding space by injecting molten resin into a molding space (e.g., a cavity) formed by combining a plurality (e.g., two or more) of cores. For example, an injection mold may include a mold device including a plurality of cores that are coupled to each other to provide a molding space corresponding to the shape of an injection product, and an injection device that injects molten resin into the molding space. Such injection molding using a mold may be useful for mass production at a relatively low cost. The molding material may be synthetic resin, and molding using molten metal may be possible.

A mold may generally form a cavity by coupling a pair of cores to face each other (hereinafter, 'mold closing'). In manufacturing simple-shaped injection products, they may be manufactured using a mold including such a pair of cores. For example, when the shape of an injection product is simple, it may be easy to separate the injection product from the cavity or core(s) after molding. When structures such as decorations like engravings or patterns on the surface, or grooves, protrusions and/or hooks for binding with other parts are created, the injection product after molding may be difficult to separate from the cavity or core(s). When molding such complex-shaped injection products, the mold may include a greater number of cores. For example, although the complexity of the process or mold may increase according to the shape of the injection product, injection molding may provide an environment for manufacturing products of various shapes.

Injection molding technology may mold injection products with parts of different materials (hereinafter, 'inserts') embedded through insert injection, not just in product manufacturing using synthetic resin. For example, by injecting molten resin while metal parts such as hooks, screws, or fastening bosses are pre-disposed inside the mold, the metal parts may be embedded or buried in the injection product simultaneously with the molding of the injection product. By embedding the metal parts listed above, the injection product may be easily combined with other parts, and the rigidity or electrical function of the injection product may be additionally provided according to the shape or material of the embedded metal parts.

The above-described information may be provided as related art for the purpose of helping understanding of the disclosure. No assertion or determination is made as to whether any of the above-described content may be applied as prior art in relation to the disclosure.

### [Detailed Description of the Invention]

### [Technical Solution]

According to an embodiment of the disclosure, a mold for manufacturing molded products using molten materials may include a first core configured to provide an accommodation space open on one surface thereof, a second core at least partially accommodated in the accommodation space and disposed on the first core so as to reciprocate linearly along a first direction, and a third core moving in the first direction to be coupled to at least the second core out of the first core or the second core while facing the second core, wherein the third core is configured to combine with the second core to form a cavity corresponding to a shape of a product to be manufactured. In an embodiment, the second core may provide a first sub-cavity of a first shape corresponding to at least a portion of the cavity when accommodated in the accommodation space while being coupled with the third core, and may be configured to provide a second sub-cavity of a second shape different from the first shape while being at least partially retracted from the accommodation space when separated from the third core.

According to an embodiment of the disclosure, a mold may include a first core providing an accommodation space open on one surface, a second core at least partially accommodated in the accommodation space and disposed to appear and disappear on one surface of the first core, a pressing member disposed on the first core and configured to press the second core in a direction to separate from the accommodation space, and a third core moving in a first direction to be coupled to at least the second core out of the first core or the second core while facing the second core, wherein the third core is configured to combine with the second core to form a cavity corresponding to the shape of the product. In an embodiment, the second core may be configured to provide a first sub-cavity corresponding to at least a portion of the cavity when accommodated in the accommodation space while being coupled with the third core, and to provide a second sub-cavity expanded relative to the first sub-cavity while being retracted by the pressing member from the accommodation space by a designated distance when separated from the third core.

### [Brief Description of Drawings]

The above-described aspects or other aspects, configurations and/or advantages of an embodiment of the disclosure may become clearer through the following detailed description with reference to the accompanying drawings.
FIG. 1 is a view illustrating a mold according to an embodiment of the disclosure.
FIG. 2 is a view illustrating the first core and the second core of the mold of FIG. 1 according to an embodiment of the disclosure.
FIG. 3 is an enlarged view illustrating the first core and the second core of the mold of FIG. 1 according to an embodiment of the disclosure.
FIG. 4 is a view illustrating a portion of the second core of the mold of FIG. 1 according to an embodiment of the disclosure.
FIG. 5 is a view illustrating another portion of the second core of the mold of FIG. 1 according to an embodiment of the disclosure.
FIG. 6 is a view illustrating yet another portion of the second core of the mold of FIG. 1 according to an embodiment of the disclosure.
FIG. 7 is a view illustrating the mold of FIG. 1 in a mold-closed state according to an embodiment of the disclosure.
FIG. 8 is a view illustrating the first core and the second core when the mold of FIG. 1 is in a mold-closed state according to an embodiment of the disclosure.
FIG. 9 is a view illustrating the first core and the second core of a mold according to an embodiment of the disclosure, illustrating a cross-section taken along line A-A' of FIG. 8.
FIG. 10 is a view illustrating the mold of FIG. 1 in a mold-open state according to an embodiment of the disclosure.
FIG. 11 is a view illustrating the first core and the second core when the mold of FIG. 1 is in a mold-open state according to an embodiment of the disclosure.
FIG. 12 is a view illustrating the first core and the second core of a mold according to an embodiment of the disclosure, illustrating a cross-section taken along line B-B' of FIG. 11.
FIG. 13 is a view illustrating a state in which a molded product is positioned in the second core when a mold is in a mold-open state according to an embodiment of the disclosure.
FIG. 14 is a view illustrating an example of a molded product manufactured with a mold according to an embodiment of the disclosure.
FIG. 15 is a view illustrating an example of a molded product manufactured with a mold according to an embodiment of the disclosure.
FIG. 16 is a view illustrating an example of a molded product manufactured with a mold according to an embodiment of the disclosure.
FIG. 17 is a view illustrating a state in which a molded product is positioned in the second core when a mold is in a mold-open state according to an embodiment of the disclosure.
FIG. 18 is a view illustrating an example of a molded product manufactured with the mold of FIG. 17 according to an embodiment of the disclosure.
FIG. 19 is a view illustrating an example of a molded product manufactured with the mold of FIG. 17 according to an embodiment of the disclosure.
FIG. 20 is a view illustrating an example of a molded product manufactured with the mold of FIG. 17 according to an embodiment of the disclosure.
FIG. 21 is a view illustrating the second core and the fourth core when a mold is in a mold-closed state according to an embodiment of the disclosure.
FIG. 22 is a view illustrating the second core and the fourth core when a mold is in a mold-closed state according to an embodiment of the disclosure.
FIG. 23 is a view illustrating the second core and the fifth core when a mold is in a mold-closed state according to an embodiment of the disclosure.
FIG. 24 is a view illustrating an example of a molded product manufactured with a mold according to an embodiment of the disclosure.

Throughout the accompanying drawings, similar reference numerals may be given to similar parts, configurations and/or structures.

### [Mode for Carrying out the Invention]

Manufacturing molded products using molten materials and molds may be useful for mass production of products having substantially the same shape and quality. When a molded product has a complex shape, a mold may provide an environment in which a cavity corresponding to the shape of the molded product is implemented by combining a plurality of cores, and the molded product may be easily separated from the mold after the molding process. For example, in manufacturing parts such as housings or cases of electronic devices such as smartphones, a mold may provide a cavity corresponding to the shape of the molded product by combining a plurality of cores. Here, according to the external design of the electronic device, two opposite sides of the housing (e.g., left and right sides, or top and bottom sides) may be symmetrical to each other and may be curved surfaces (or inclined surfaces). Such complex shapes of molded products (e.g., housings) may be determined in consideration of aesthetics or grip feeling in appearance, e.g., and this is mentioned as an example and the embodiment(s) of the disclosure are not limited thereto.

In manufacturing such a housing using a mold and facilitating extraction, a plurality of cores corresponding to one curved surface may be provided. For example, to implement a molded product including inclined or curved surfaces on surfaces disposed in different directions, a mold may include a greater number of cores. However, when a plurality of cores are combined to implement one continuous plane or one continuous curved surface, a line-shaped protruding portion may be created on the corresponding surface. For example, an undesigned protruding structure may be created on the surface of the molded product along the boundary between two cores in contact with each other during the molding process. When an undesigned protruding structure is created, the molded product may be processed into a product (e.g., housing or case) of the designed shape by removing the undesigned protruding structure through an additional process such as polishing. Such additional processing may increase the cost or time of product manufacturing.

An embodiment of the disclosure is to at least solve the above-described problems and/or disadvantages and to at least provide the advantages described below, and may provide a mold including a transformable core that facilitates the molding process and/or separation of the molded product from the core.

An embodiment of the disclosure may provide a mold including a transformable core that may suppress the creation of undesigned structures.

An embodiment of the disclosure may provide a mold including a transformable core that may reduce costs or manufacturing time associated with post-processing by suppressing the creation of undesigned structures.

The technical objects to be achieved in this document are not limited to the technical problems mentioned above, and other technical objects not mentioned may be clearly understood by those skilled in the art to which the disclosure belongs from the description below.

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. In connection to the description of the drawings, similar reference numerals may be used for similar or related components. It is to be understood that a singular form of a noun corresponding to an item may include one or more of the things, unless the relevant context clearly indicates otherwise. In this document, phrases such as "A or B", "at least one of A and B", "at least one of A or B", "A, B or C", "at least one of A, B and C", and "at least one of A, B, or C" may each include any one of the items listed together in the corresponding phrase, or all possible combinations thereof. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

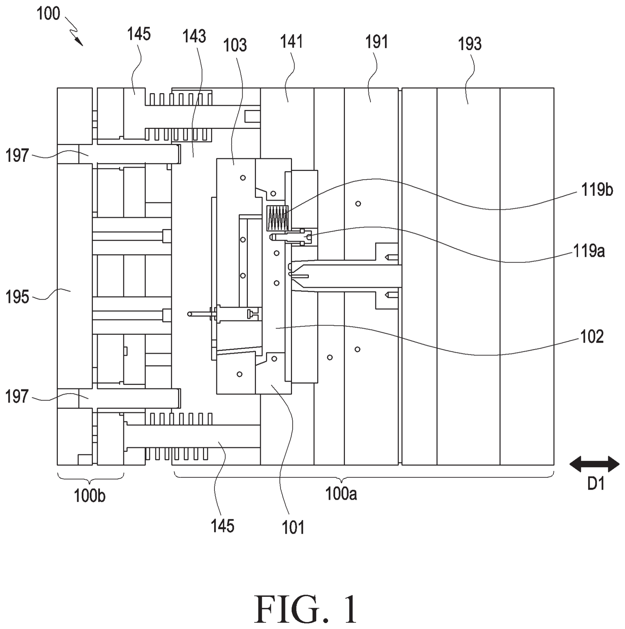

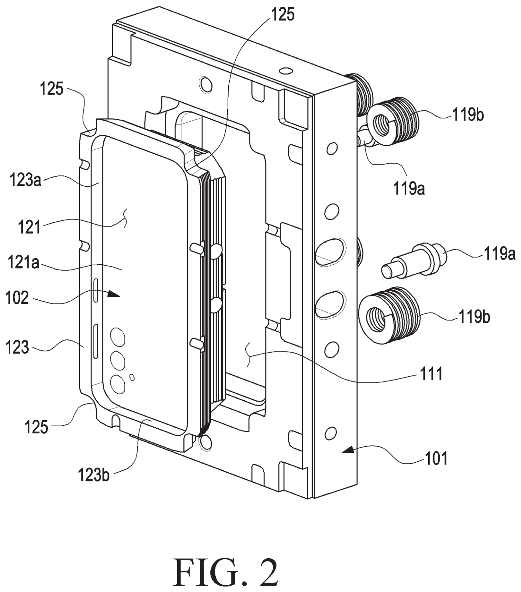

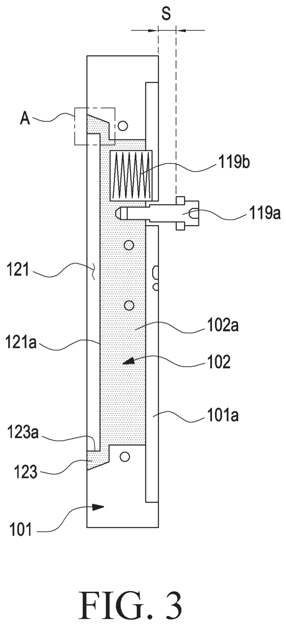

FIG. 1 is a view illustrating a mold 100 according to an embodiment of the disclosure. FIG. 2 is a view illustrating a first core 101 and a second core 102 of the mold 100 of FIG. 1 according to an embodiment of the disclosure. FIG. 3 is an enlarged view illustrating the first core 101 and the second core 102 of the mold 100 of FIG. 1 according to an embodiment of the disclosure.

Referring to FIGS. 1 to 3, a mold 100 according to an embodiment of the disclosure includes a first core 101, a second core 102, and/or a third core 103, and the second core 102 may be disposed on the first core 101 to be capable of reciprocating in a first direction D1. In an embodiment, the third core 103 may be disposed to be capable of reciprocating in the first direction D1 to couple with at least the second core 102 among the first core 101 and the second core 102. FIG. 1 or FIG. 3 illustrates a state in which the third core 103 is coupled with the second core 102 (and/or the first core 101), and the state in which the second core 102 and the third core 103 are coupled may be referred to as a 'mold-closed state'. In the mold-closed state, the second core 102 and the third core 103 may be combined to implement a molding space in which molten material is to be injected, e.g., a cavity.

According to an embodiment, the mold 100 may include a fixed portion 100a on which the first core 101, the second core 102 and/or the third core 103 are disposed, and a movable portion 100b that moves the third core 103 relative to the first core 101 and/or the second core 102 while moving in the first direction D1 relative to the fixed portion 100a. As is described below, as the movable portion 100b moves to the right in FIG. 1, the third core 103 may be coupled with the second core 102 and/or the first core 101, and as the movable portion 100b moves to the left in FIG. 1, the third core 103 may gradually move away from the second core 102 and/or the first core 101. Although no reference number is allocated, the fixed portion 100a may include an actuator to move the third core 103 away from the second core 102 and/or the first core 101 while the movable portion 100b moves to the left. Such an actuator may include a spring, a hydraulic cylinder and/or a motor.

According to an embodiment, the fixed portion 100a may include a first plate (e.g., upper plate) 141, a second plate (e.g., lower plate) 143, a first base plate 191, and/or at least one heating plate 193. The first base plate 191 may be a structure for disposing or fixing the structures (e.g., the first plate 141, the second plate 143, the heating plate(s) 193 and/or the cores 101, 102, 103) of the fixed portion 100a, and the first plate 141 may be fixed on one surface of the first base plate 191. In an embodiment, the first plate 141 may function as a structure for disposing or fixing the first core 101 and/or the second core 102, and the second plate 143 may function as a structure for disposing or fixing the third core 103. In an embodiment, the mold-closed state and the mold-open state may be determined by the second plate 143 moving in the first direction D1 relative to the first plate 141. In an embodiment, the heating plate 193 may be disposed, e.g., between the first plate 141 and the first base plate 191, and/or on the other surface of the first base plate 191.

According to an embodiment, the heating plate(s) 193 may maintain or regulate the temperature of the first core 101, the second core 102 and/or the third core 103 during the molding process. For example, while molten material is injected into the cavity implemented by the combination of the second core 102 and the third core 103, the heating plate(s) 193 may heat the first core 101, the second core 102 and/or the third core 103 to maintain the temperature of at least the space provided by the cavity within a designated range, and after the injection of molten material is completed, may be configured to stop heating or cool the first core 101, the second core 102 and/or the third core 103. Thus, the heating plate(s) 193 may be utilized to facilitate the injection of molten material and reduce the time required for manufacturing molded products.

According to an embodiment, the fixed portion 100a may further include guide shaft(s) 145 provided on the first plate 141. In an embodiment, the second plate 143 (e.g., the third core 103) may move along the first direction D1 while being guided by the guide shaft(s) 145, e.g., in a direction away from or approaching the second core 102 (and/or the first core 101). In an embodiment, although no reference number is allocated, spring(s) may be provided in a state surrounding at least a portion of the guide shaft(s) 145, thereby functioning as an actuator that moves the third core 103 away from the second core 102 (and/or the first core 101).

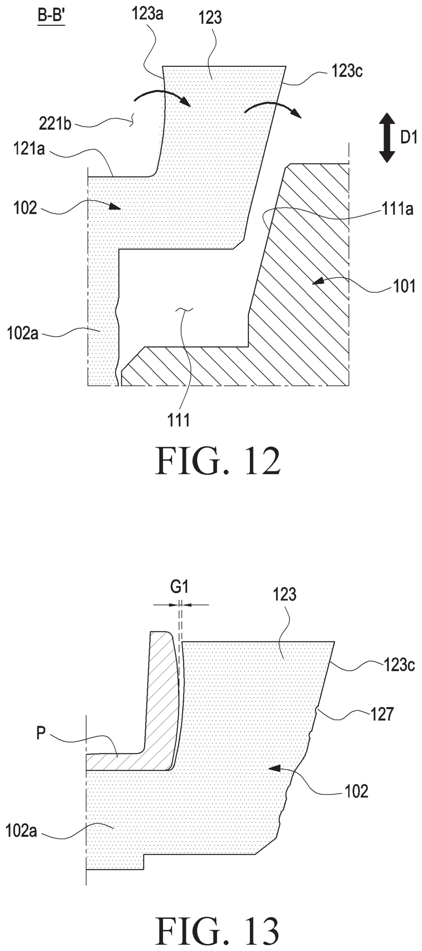

According to an embodiment, the movable portion 100b may include a second base plate 195 that reciprocates in the first direction D1, and push rod(s) 197 extending from the second base plate 195 along the first direction D1. When the movable portion 100b moves to the right in FIG. 1, the push rod(s) 197 may move the second plate 143 (e.g., the third core 103) from a designated position in a direction approaching the first plate 141 (e.g., the second core 102 and/or the first core 101). In an embodiment, the push rod(s) 197 may always contact the second plate 143, and the movable portion 100b may move to the left in FIG. 1 by an interval required to separate the molded product (e.g., the molded product P in FIG. 13) from the second core 102. When the movable portion 100b moves to the left in FIG. 1, the second plate 143 and/or the third core 103 may gradually move away from the first plate 141 (and/or the second core 102) by the actuator.

According to an embodiment, the first core 101 is provided on the fixed portion 100a and may be referred to as an 'upper core'. In an embodiment, the first core 101 may be understood as providing or defining an accommodation space 111 open on one surface. For example, the first core 101 may provide an accommodation space 111 that receives at least a portion of the second core 102. The second core 102 may perform a reciprocating motion of being accommodated in the accommodation space 111 or retracted from the accommodation space 111 by moving along the first direction D1 by the movable portion 100b and/or the third core 103. For example, the second core 102 may linearly reciprocate along the first direction D1 on the first core 101 and/or on the accommodation space 111.

According to an embodiment, as it linearly reciprocates on the accommodation space 111, the second core 102 may be deformed by being interfered with by the inner wall surface (e.g., the inner wall surface 111a of FIG. 12) (e.g., a surface defining a portion of the accommodation space 111) of the first core 101. For example, as the second core 102 gradually enters the accommodation space 111, it may be understood that the first core 101 presses or pushes the second core 102. In an embodiment, the inner wall surface of the first core 101 may be provided inclined with respect to the first direction D1. For example, the load applied to the second core 102 by the first core 101 may gradually increase as it is gradually accommodated in the accommodation space 111.

According to an embodiment, the second core 102 may accumulate elastic force or restoring force while being deformed corresponding to the load generated by the first core 101. The restoring force of the second core 102 may be converted by the inner wall surface (e.g., inclined structure) of the first core 101 to act as a force that retracts the second core 102 from the accommodation space 111. However, this is an exemplary mention, and the restoring force of the second core 102 may be substantially smaller than the static friction force between the second core 102 and the first core 101, and in this case, the second core 102 may not be retracted from the accommodation space 111 even when the restoring force of the second core 102 acts.

According to an embodiment, in disposing the second core 102 on the first core 101, the mold 100 (and/or the fixed portion 100a) may include at least one locking bolt 119a and/or at least one pressing member 119b. The locking bolt 119a is disposed, e.g., penetrating the first core 101 (e.g., the fixing plate 101a) in a state slidable on the accommodation space 111, and may be bound to the second core 102 to set a section in which the second core 102 linearly reciprocates. For example, the second core 102 may be disposed on one surface of the first core 101 and interfered with the first core 101 to limit its movement range to the right in FIG. 1, and a portion of the locking bolt 119a may be interfered with the other surface of the first core 101 to limit the movement range of the second core 102 to the left in FIG. 1. In an embodiment, the locking bolt 119a couples the second core 102 to the first core 101 in a reciprocally movable state, and may set a gap or distance (e.g., the distance illustrated as 'S' in FIG. 3) by which the second core 102 is retracted from the accommodation space 111.

According to an embodiment, the pressing member 119b may be disposed on the first core 101 and configured to press the second core 102. For example, the pressing member 119b may be disposed between the first core 101 and the second core 102 and provide an elastic force or driving force acting in a direction to retract the second core 102 from the accommodation space 111. In an embodiment, the pressing member 119b may include an elastic body or driving device such as a spring, a pneumatic cylinder, a hydraulic cylinder and/or a motor. Even when the elastic force or driving force of the pressing member 119b acts, the second core 102 may maintain a state bound to the first core 101 by the locking bolt 119a. Thus, when no external force acts, the second core 102 may be retracted from the accommodation space 111 by a designated gap or designated distance S and protrude from one surface of the first core 101.

According to an embodiment, the height where the second core 102 protrudes from one surface of the first core 101 may be substantially determined by the locking bolt 119a. For example, the maximum height where the second core 102 may protrude from one surface of the first core 101 may be the distance, height and/or gap illustrated as 'S' in FIG. 3. In an embodiment, when an external force acts, the second core 102 may be accommodated in the accommodation space 111. For example, the movable portion 100b and/or the third core 103 may move the second core 102 into the accommodation space 111 while moving along the first direction D1. Although it may vary according to the actually manufactured specifications, when accommodated in the accommodation space 111, the second core 102 may not substantially protrude from one surface of the first core 101. For example, some of the surfaces of the second core 102 may be disposed to form a substantially continuous curved surface or continuous plane with one surface of the first core 101. In an embodiment, when accommodated in the accommodation space 111, some of the surfaces of the second core 102 may be positioned lower than one surface of the first core 101 and may be understood as being substantially disposed inside the accommodation space 111.

In the illustrated embodiment, a configuration may be illustrated in which the first core 101 includes a fixing plate 101a disposed on the other surface. The fixing plate 101a may be disposed or fixed to provide at least a portion of the other surface of the first core 101 while substantially closing the accommodation space 111 on the other surface of the first core 101. However, the embodiment(s) of the disclosure are not limited thereto, and the first core 101 may be provided substantially as a single piece body. In an embodiment, when the first core 101 includes the fixing plate 111a, the locking bolt 119a and/or the pressing member 119b may be disposed on the fixing plate 101a.

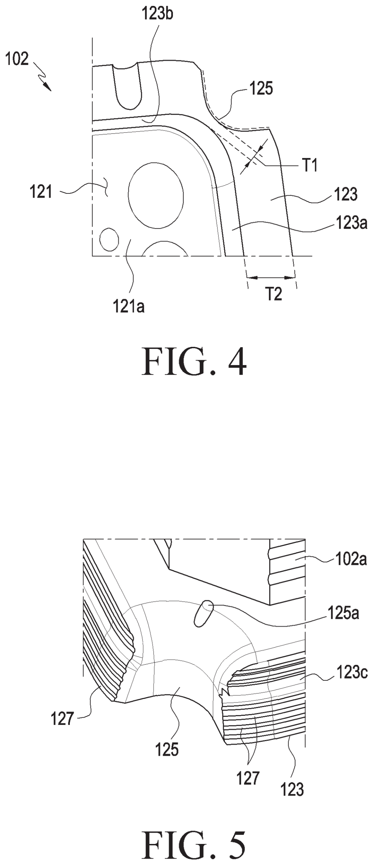

The configuration of the second core 102 is examined with further reference to FIGS. 4 to 6. In describing the configuration of the second core 102, the configuration of the mold described above may be referenced.

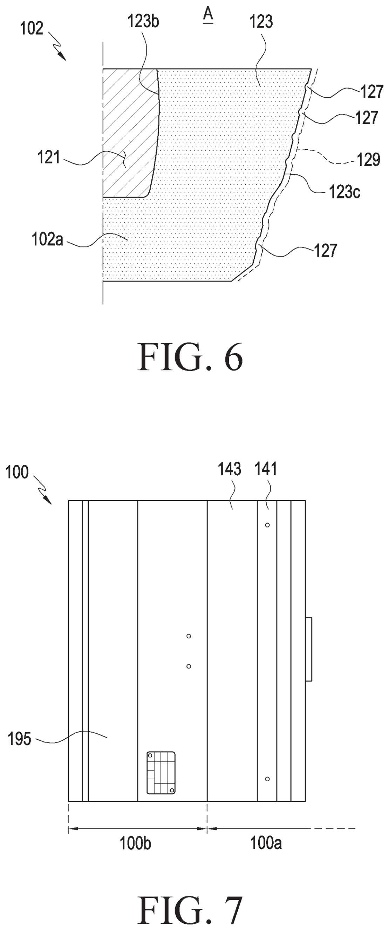

FIG. 4 is a view illustrating a portion of the second core 102 of the mold 100 of FIG. 1 according to an embodiment of the disclosure. FIG. 5 is a view illustrating another portion of the second core 102 of the mold 100 of FIG. 1 according to an embodiment of the disclosure. FIG. 6 is a view illustrating yet another portion of the second core 102 of the mold 101 of FIG. 1 according to an embodiment of the disclosure.

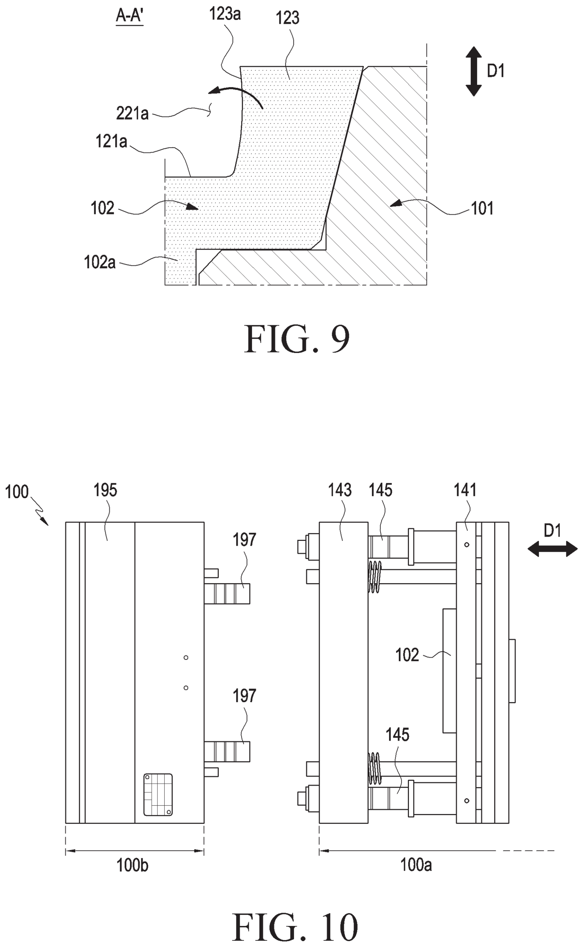

With further reference to FIGS. 4 to 6, the second core 102 provides a space (e.g., the sub-cavity 121) corresponding to at least a portion of the shape of the molded product to be manufactured (e.g., the molded product P in FIG. 13), and may be deformed as it is accommodated in or retracted from the accommodation space 111. For example, when accommodated in the accommodation space 111, the second core 102 may be pressed by the inner wall surface of the first core 101 (e.g., a portion of the surface surrounding the accommodation space 111) and the sub-cavity 121 may gradually become smaller. In embodiments described below, the sub-cavity 121 when the second core 102 is completely accommodated in the accommodation space 111 may be referred to as a 'first sub-cavity (e.g., the first sub-cavity 221a of FIG. 9)', and the sub-cavity 121 when the second core 102 is sufficiently retracted from the accommodation space 111 may be referred to as a 'second sub-cavity (e.g., the second sub-cavity 221b of FIG. 12)'. Here, 'when the second core 102 is sufficiently retracted from the accommodation space 111' may refer to the second core 102 reaching a state in which it is not substantially interfered with by the first core 101. The first sub-cavity 221a and the second sub-cavity 221b mentioned above are for distinguishing the sub-cavity 121 according to the shape of the second core 102, and it should be noted that such mention does not limit the embodiment(s) of the disclosure. In an embodiment, the second sub-cavity 221b may refer to a state or shape that provides a larger space than the first sub-cavity 221a. For example, when accommodated in the accommodation space 111, the second core 102 has a shape implementing the first sub-cavity 221a, and as it is retracted from the accommodation space 111, the second core 102 may implement the second sub-cavity 221b providing an expanded space compared to the first sub-cavity 221a.

According to an embodiment, in terms of Rockwell Hardness on the C scale, the first core 101 may have a hardness about 8-12 higher than the second core 102. Rockwell Hardness on the C scale may be referred to as 'HrC', and may be one of the methods for measuring hardness by pressing a sample surface with a constant load using an indenter and measuring the depth of penetration of the indenter tip. HrC may be measured, e.g., using a diamond indenter with a 120-degree cone and a tip radius of 0.2mm. In manufacturing molded products using molten materials, such a difference in hardness between the first core 101 and the second core 102 may allow repeated deformation/restoration of the second core 102 while maintaining the structural stability of the first core 101 and the second core 102.

According to an embodiment, to suppress wear occurring in the accommodation operation into the accommodation space 111 or the retraction operation from the accommodation space 111, or adhesion between the first core 101 and the second core 102 due to heat and pressure in the molding process, the mold 100 and/or the fixed portion 100a may further include a lubricating coating layer 129. The lubricating coating layer 129 may be provided in areas of direct contact between the first core 101 and the second core 102, such as the outer surface of the second core 102 or the inner wall surface of the first core 101. The lubricating coating layer 129 may be formed by injecting carbon component gas into a vacuum space and generating plasma to deposit a coating film on the surface of the first core 101 and/or the second core 102. Such a lubricating coating layer 129 may have heat resistance sufficient to be maintained even at temperatures in the molding process, and may reduce friction in the operation of the second core 102 being accommodated in or retracted from the accommodation space 111.

According to an embodiment, the second core 102 may provide or define at least a portion of the sub-cavity 121 by including a base portion 102a and/or a sidewall structure 123. In an embodiment, as mentioned earlier, as it is accommodated in the accommodation space 111 and/or retracted from the accommodation space 111, the second core 102 may be deformed so that the size of the space provided by the sub-cavity 121 becomes smaller or larger. In an embodiment, the base portion 102a may be a plate shape providing the lower surface 121a of the sub-cavity 121, and the sidewall structure 123 may have a frame shape protruding from the edge of the base portion 102a. For example, the inner wall surfaces 123a, 123b of the sidewall structure 123 may be substantially a shape defining at least a portion of the sub-cavity 121. In an embodiment, when the third core 103 is coupled with the second core 102 (and/or the first core 101), a portion of the third core 103 may be accommodated in the sub-cavity 121 to implement a cavity of the shape of the molded product to be manufactured (e.g., the molded product P in FIG. 13). For example, the sub-cavity 121 may provide an area or space corresponding to at least a portion of the shape of the molded product.

According to an embodiment, the second core 102 may include at least one notch 125 provided on the outer wall surface 123c of the sidewall structure 123. In an embodiment, when generally in a rectangular frame shape, the sidewall structure 123 may include a plurality (e.g., four) of notches 125. For example, the sidewall structure 123 may include notches 125 each provided at corner portion(s) formed where two sides meet. In an embodiment, when the sidewall structure 123 has a first thickness T1 between the inner wall surfaces 123a, 123b and the outer wall surface 123c at positions where the notch(es) 125 are formed, it may have a second thickness T2 greater than the first thickness T1 in areas where the notch(es) 125 are not formed. For example, when the second core 102 is deformed, the deformation of the sidewall structure 123 may be smoother in areas where the notch(es) 125 are formed than in areas where the notch(es) 125 are formed. For example, by providing a notch 125 at at least one of the corner portion(s) of the sidewall structure 123, the second core 102 may be smoothly deformed to the designed shape in the operation of being accommodated in or retracted from the accommodation space 111. The actual values of the first thickness T1 and the second thickness T2 may be appropriately selected according to the specifications of the mold to be actually manufactured (e.g., the mold 100 of FIG. 1).

According to an embodiment, the second core 102 may further include dummy recess(es) 125a formed on the surface (e.g., the outer wall surface 123c of the sidewall structure 123 or the surface of the base portion 102a). The dummy recess(es) 125a may be provided, e.g., at portions of the second core 102 to be deformed, thereby inducing or facilitating the deformation of the second core 102 into a designated shape. In an embodiment, the dummy recess(es) 125a may be provided adjacent to the position where the notch 125 is formed. In an embodiment, the dummy recess(es) 125a may be understood as being implemented as one of the above-described notches 125.

According to an embodiment, the second core 102 may further include a plurality of grooves 127 provided on the surface in direct contact with the first core 101 (e.g., the outer wall surface 123c of the sidewall structure 123). By providing a plurality of grooves 127 on the surface of the second core 102, the area in direct contact with the first core 101 may be decreased. For example, by providing a plurality of grooves 127 on the surface of the second core 102, friction generated in the operation of the second core 102 being accommodated in or retracted from the accommodation space 111 may be decreased. In an embodiment, the second core 102 may include at least one of the groove(s) 127 and/or the above-described lubricating coating layer 129, thereby suppressing adhesion with the first core 101 or increase in friction.

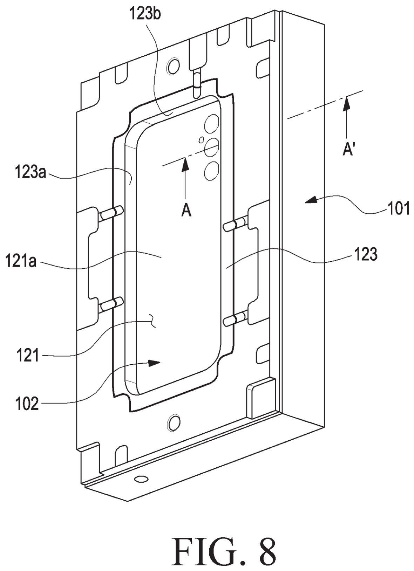

FIG. 7 is a view illustrating the mold 100 of FIG. 1 in a mold-closed state according to an embodiment of the disclosure. FIG. 8 is a view illustrating the first core 101 and the second core 102 when the mold 100 of FIG. 1 is in a mold-closed state according to an embodiment of the disclosure. FIG. 9 is a view illustrating the first core 101 and the second core 102 of the mold 100 according to an embodiment of the disclosure, illustrating a cross-section taken along line A-A' of FIG. 8.

Referring to FIGS. 7 to 9, in the mold-closed state, e.g., when the movable portion 100b moves in the first direction D1 (e.g., to the right in FIG. 1) and the third core 103 is coupled with the second core 102, the second core 102 is substantially accommodated in the first core 101 (e.g., the accommodation space 111 of FIG. 2), and some of the surfaces of the second core 102 may be disposed on a substantially continuous plane (or continuous curved surface) with one surface of the first core 101. As it is accommodated in the accommodation space 111, a portion of the second core 102 (e.g., the sidewall structure 123) may be deformed inward and the sub-cavity 121 may be implemented as the first sub-cavity 221a. For example, as it is accommodated in the accommodation space 111, the inner wall surface of the first core 101 may press the outer wall surface 123c of the sidewall structure 123 to move or deform it. In this case, the locking bolt 119a is in a state protruding from the other surface of the first core 101, and when no external force acts (e.g., in the mold-open state), it may move to the left along the first direction D1 by the designated gap or designated distance S illustrated in FIG. 3. The first sub-cavity 221a provides, e.g., a smaller space than when no external force acts on the second core 102, and may provide a shape substantially corresponding to at least a portion of the shape of the molded product to be manufactured (e.g., the molded product P in FIG. 13).

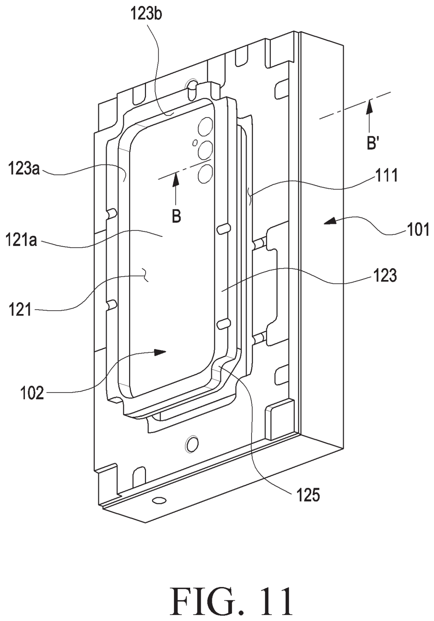

FIG. 10 is a view illustrating the mold 100 of FIG. 1 in a mold-open state according to an embodiment of the disclosure. FIG. 11 is a view illustrating the first core 101 and the second core 102 when the mold 100 of FIG. 1 is in a mold-open state according to an embodiment of the disclosure. FIG. 12 is a view illustrating the first core 101 and the second core 102 of the mold 100 according to an embodiment of the disclosure, illustrating a cross-section taken along line B-B' of FIG. 11.

Referring to FIGS. 10 to 11, in the mold-open state, e.g., when the movable portion 100b moves in the first direction D1 (e.g., to the left in FIG. 1) and the third core 103 is separated from the second core 102, the pressing member 119b (e.g., the pressing member 119b of FIG. 2 or FIG. 3) and/or the restoring force of the second core 102 may retract the second core 102 from the accommodation space 111. When retracted from the accommodation space 111 by the designated distance (e.g., the distance S of FIG. 3) while being guided by the locking bolt 119a, the second core 102 may at least partially protrude from one surface of the first core 101. In an embodiment, the distance that the second core 102 is retracted from the accommodation space 111, or the height protruding from one surface of the first core 101, may be, e.g., less than the designated distance S of FIG. 3 or substantially equal to the designated distance S. As it is retracted from the accommodation space 111, the second core 102 may be deformed into a shape implementing the second sub-cavity 221b providing a larger space than the first sub-cavity 221a. For example, since there is no external force or structure pressing the outer wall surface 123c of the sidewall structure 123a, the second core 102 may be restored to a shape providing a larger space than the molded product to be manufactured (e.g., the molded product P in FIG. 13). When the second core 102 is retracted from the accommodation space 111 by the force provided by the pressing member 119b, the locking bolt 119a on the first core 101 (e.g., the fixing plate 101a) may move to the left in FIG. 1 along the first direction D1. In an embodiment, with the force provided by the pressing member 119b still acting, a portion of the locking bolt 119a interferes with the other surface of the first core 101, whereby the second core 102 may be stopped on the first core 101 in a state retracted from the accommodation space 111 by the designated distance S.

FIG. 13 is a view illustrating a state in which a molded product P is positioned in the second core 102 when a mold (e.g., the mold 100 of FIG. 1) is in a mold-open state according to an embodiment of the disclosure.

According to an embodiment, the surface of the molded product P manufactured by injecting molten material into the mold may be substantially in tight contact with the second core 102 and/or the third core 103 in the mold-closed state. For example, after the space formed by combining the second core 102 (e.g., the sub-cavity 121) and a portion of the third core 103 is filled with molten material, the molded product P may be manufactured in tight contact with the second core 102 and/or the third core 103 by the molten material hardening. When such a molded product P includes a surface inclined or convex with respect to the direction of separation from the second core 102, it may be difficult to separate from the mold 100 in a state of tight contact with the second core 102. For example, damage such as scratching may occur on the inclined or convex surface in the process of separating the molded product P in tight contact with the second core 102.

Referring to FIG. 13, the mold 100 according to the embodiment(s) of the disclosure may allow the molded product P to be easily separated from the core (e.g., the second core 102) by the core (e.g., the second core 102) implementing the outer surface of the molded product P implementing a sub-cavity (e.g., the sub-cavity 121 of FIG. 2 or the second sub-cavity 221b of FIG. 12) of an extended size compared to the molded product P in the mold-open state. In FIG. 13, the first gap indicated as 'G1' illustrates the difference between when the second core 102 is in the first sub-cavity 221a state (e.g., implemented in the mold-closed state during the molding process) and the second sub-cavity 221b state (e.g., implemented in the mold-open state), and the second core 102 of FIG. 13 may illustrate the mold-open state. For example, in the mold-closed state, the second core 102 has a shape substantially in tight contact with the molded product P, and in the mold-open state, it may provide a space extended by the first gap G1 compared to the mold-closed state while being elastically restored (e.g., the space implemented by the second sub-cavity 221b being deformed from the sub-cavity 121 of FIG. 2). For example, by providing the first gap G1 between the second core 102 and the molded product P, the molded product P may be easily separated from the second core 102. Even without the first gap G1, separation of the molded product P would be possible, but when including inclined or convex surfaces, the defect rate may increase due to scratching or permanent deformation. The mold 100 according to the embodiment(s) of the disclosure may facilitate extraction of the molded product P from the mold 100 (e.g., the second core 102) and reduce the defect rate by the second core 102 being deformed into a shape providing an extended sub-cavity 121 (e.g., the second sub-cavity 221b of FIG. 12) in the mold-open state.

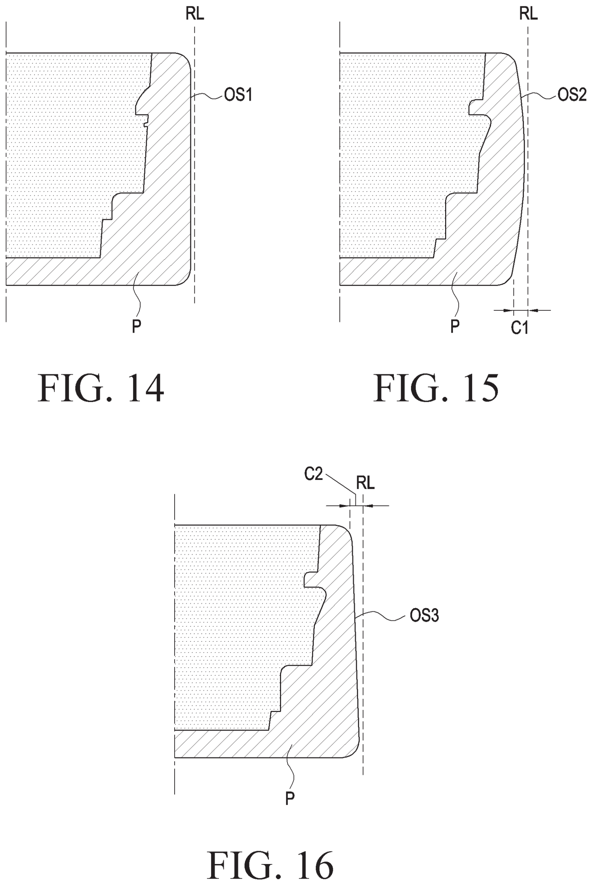

FIG. 14 is a view illustrating an example of a molded product P manufactured with a mold (e.g., the mold 100 of FIG. 1) according to an embodiment of the disclosure. FIG. 15 is a view illustrating an example of a molded product P manufactured with the mold 100 according to an embodiment of the disclosure. FIG. 16 is a view illustrating an example of a molded product P manufactured with the mold 100 according to an embodiment of the disclosure.

In FIGS. 14 to 16, the reference line indicated as 'RL' illustrates, e.g., a line parallel to the direction in which the molded product P is separated from the second core 102, and may illustrate the position where the width of the molded product P is greatest in the direction crossing the reference line RL. The molded product P of FIG. 14 has a shape including a side surface OS1 substantially parallel to the reference line RL, and may have a constant width when viewed in the cross-sectional view illustrating FIG. 14. In this case, separation of the molded product P may be easy regardless of the deformation of the mold 100 (e.g., the second core 102), and the molded product may be hardly damaged when separated from the mold 100. In an embodiment, when the second core 102 is deformed to extend the sub-cavity 121 in the mold-open state, the inner surface of the second core 102 (e.g., the inner wall surfaces 123a, 123b of the sidewall structure 121 of FIG. 2) may be separated from the surface of the molded product P, making separation of the molded product P even easier.

The molded product P of FIG. 15 includes a side surface OS2 implemented to have the greatest width at the middle portion, and there may be a first deviation C1 between the width of the upper portion (or lower portion) and the width of the middle portion. For example, the molded product P of FIG. 15 may have a shape where the middle portion of the side surface OS2 provides a convex surface. In an embodiment, when separated without the second core 102 (e.g., the sub-cavity 121) being extended in the mold-open state, damage such as scratching may occur at the middle portion of the side surface OS2 of the molded product P. According to an embodiment of the disclosure, in the mold-closed state, the second core 102 is in tight contact with the side surface OS2 of the molded product P of FIG. 15, and in the mold-open state, the second core 102 may be deformed to form a gap (e.g., the first gap G1 of FIG. 13) greater than the first deviation C1. Thus, even when the molded product P has a protruding structure and/or convex curved portion on its surface, the molded product P may be easily separated from the mold and/or the second core.

The molded product P of FIG. 16 may include a side surface OS3 having a shape that gradually increases in width from the upper portion toward the lower portion, and there may be a second deviation C2 between the width of the upper portion and the width of the lower portion. In this case, the sub-cavity 121 of the second core 102 may have the smallest width at a position corresponding to the upper portion of the molded product P. Here, 'having the smallest width at a position corresponding to the upper portion of the molded product P' may refer to the width of the second core 102 in the mold-closed state and/or the sub-cavity 121 (e.g., the first sub-cavity 221a) in the mold-closed state. For example, when the sub-cavity 121 is not extended in the mold-open state, damage to the surface of the molded product P or permanent deformation of the molded product P may be quite frequent in the operation of separating the molded product P from the second core 102. In an embodiment of the disclosure, the second core 102 extends from the side surface OS3 of the molded product P by a designated gap (e.g., the first gap G1 of FIG. 13) in the mold-open state, thereby allowing the molded product P to be easily separated from the second core 102 substantially without damage. In an embodiment, the first gap G1 may be greater than the second deviation C2.

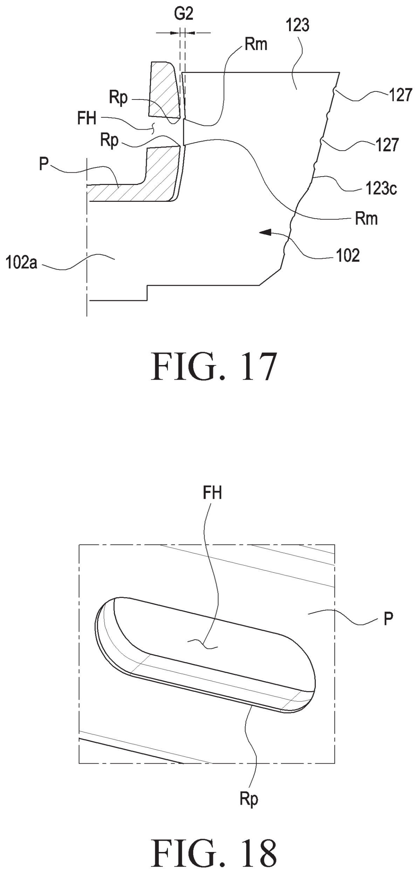

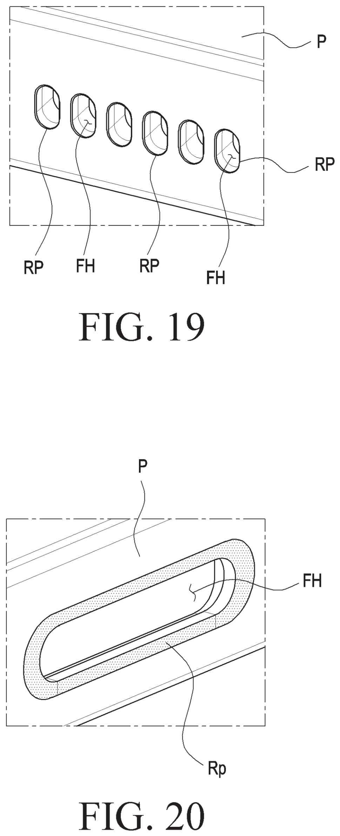

FIG. 17 is a view illustrating a state in which a molded product P is positioned in the second core 102 when a mold (e.g., the mold 100 of FIG. 1) is in a mold-open state according to an embodiment of the disclosure. FIG. 18 is a view illustrating an example of a molded product P manufactured with the mold 100 of FIG. 17 according to an embodiment of the disclosure. FIG. 19 is a view illustrating an example of a molded product P manufactured with the mold 100 of FIG. 17 according to an embodiment of the disclosure. FIG. 20 is a view illustrating an example of a molded product P manufactured with the mold 100 of FIG. 17 according to an embodiment of the disclosure.

According to an embodiment, as illustrated in FIGS. 18 to 20, the molded product P may include functional hole(s) FH. The functional hole(s) FH may be provided, e.g., as holes for receiving connector holes, acoustic holes, optical holes and/or various buttons when the molded product P is utilized as a component such as a housing of an electronic device. According to an embodiment of the disclosure, as illustrated in FIG. 17, by including at least one protrusion Rm provided on the inner wall surface (e.g., the inner wall surfaces 123a, 123b of FIG. 2) of the sidewall structure 123, a curved surface Rp or inclined surface may be implemented at the end of the functional hole(s) FH. The at least one protrusion Rm may be, e.g., a closed curve shape of a trajectory corresponding to the edge of the functional hole(s) FH. In an embodiment, the at least one protrusion Rm may be circular, elliptical and/or polygonal shapes corresponding to the shape of the functional hole(s) FH when viewed from outside the molded product P. Such functional holes FH may be formed during the molding process of the molded product P and/or by an additional process after the molding process. When formed by additional processing, the at least one protrusion Rm may illustrate the position or size where the functional holes FH are formed.

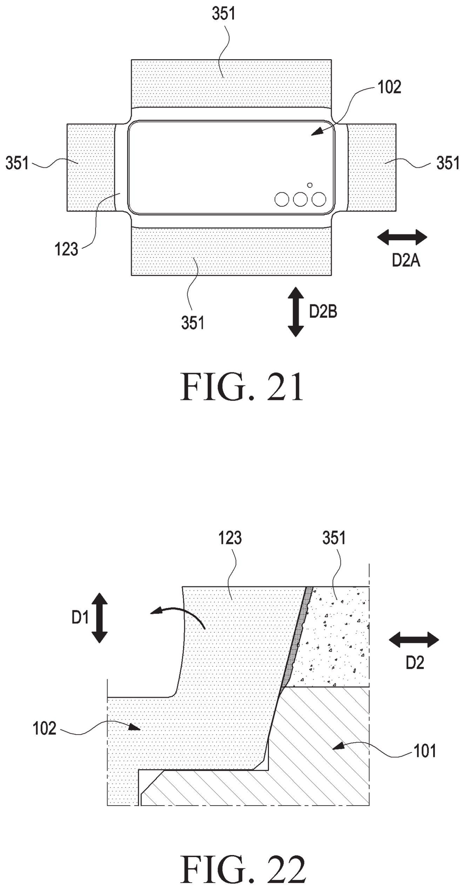

FIG. 21 is a view illustrating the second core 102 and the fourth core 351 when a mold (e.g., the mold 100 of FIG. 1) is in a mold-closed state according to an embodiment of the disclosure. FIG. 22 is a view illustrating the second core 102 and the fourth core 351 when the mold 100 is in a mold-closed state according to an embodiment of the disclosure.

Referring to FIGS. 21 and 22, the mold 100 and/or the fixed portion 100a may further include fourth core(s) 351 disposed on the first core 101 to be slidably movable along a second direction D2 (D2A, D2B) intersecting the first direction D1. When the sidewall structure 123 is in a rectangular frame shape, four fourth cores 351 may be disposed. For example, the fourth core 351 may be provided as a structure defining at least a portion of the accommodation space 111 of FIG. 2 in the mold-closed state. When four fourth cores 351 are disposed, the fourth cores 351 may slide in directions intersecting each other on substantially the same plane. In an embodiment, in the mold-closed state, the fourth core(s) 351 may support or maintain the second core 102 in a shape providing the first sub-cavity (e.g., the first sub-cavity 221a of FIG. 12) by pressing the sidewall structure 123. In an embodiment, compared to the preceding embodiment, by the mold 100 further including the fourth core(s) 351, friction between the first core 101 and the second core 102 may be decreased in the operation of being accommodated in or retracted from the accommodation space 111.

According to an embodiment, when the third core 103 is coupled with the second core 102, a portion of the fourth core 351 may penetrate the sidewall structure 123 and be disposed inside the cavity or the first sub-cavity 221a. For example, a portion of the fourth core 351 may be provided as a structure corresponding to the curved or inclined surface (e.g., the curved surface indicated as 'Rp' in FIGS. 18 to 20) of the above-described molded product P. In an embodiment, by a portion of the fourth core 351 being disposed inside the first sub-cavity 221a, it may function as a structure for molding at least a portion of the functional hole(s) FH of FIGS. 18 to 20.

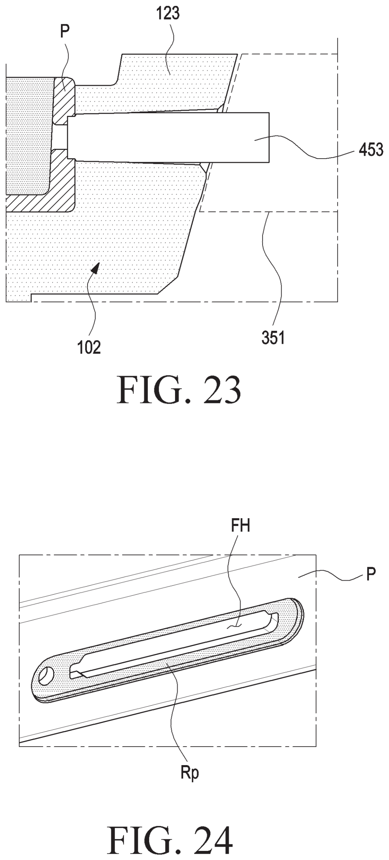

FIG. 23 is a view illustrating the second core 102 and the fifth core 453 when a mold (e.g., the mold 100 of FIG. 1) is in a mold-closed state according to an embodiment of the disclosure. FIG. 24 is a view illustrating an example of a molded product P manufactured with the mold 100 according to an embodiment of the disclosure.

With further reference to FIGS. 23 and 24, the mold 100 may include fifth core(s) 453 that are at least partially disposed inside the first sub-cavity (e.g., the first sub-cavity 221a of FIG. 12) when in the mold-closed state (e.g., when the third core 103 is coupled with the second core 102) by sliding on the first core 101. The fifth core(s) 453 may be understood, e.g., as a portion of the fourth core(s) 351 of FIG. 21 and/or FIG. 23. However, the embodiment(s) of the disclosure are not limited thereto, and a mold of an embodiment including the fifth core(s) 453 without including the fourth core(s) 351 of FIG. 21 may be implemented. The fifth core(s) 435 and/or the fourth core(s) 351 may approach or move away from the second core 102 (e.g., the sidewall structure 123) by sliding on the first core 101, as mentioned earlier. In the mold-closed state, the fifth core(s) 453 and/or the fourth core(s) 351 may slide in a direction toward the second core 102, and may be at least partially disposed inside the second core 102 (e.g., inside the first sub-cavity 221a).

In an embodiment, with a portion of the fifth core(s) 453 and/or the fourth core(s) 353 disposed inside the first sub-cavity 221a, the molded product P may be manufactured by injecting molten material. A portion of the fifth core(s) 453 and/or the fourth core(s) 353 disposed inside the first sub-cavity 221a may function as a structure for molding at least a portion of the functional hole(s) FH and/or the curved surface indicated as 'Rp' in FIGS. 18 to 20. In an embodiment, a portion of the fifth core(s) 453 and/or the fourth core(s) 351 disposed inside the first sub-cavity 221a may function as a structure for molding at least a portion of the functional hole FH and/or the seating space indicated as 'Rp' in FIG. 24. The functional hole FH of FIG. 24 may function, e.g., as a hole for inserting a storage medium and/or a hole for inserting a tray for transporting a storage medium. In an embodiment, the seating space Rp may provide a space for receiving, e.g., a cover member that conceals or closes the functional hole FH, or for receiving the head portion of a tray inserted through the functional hole FH. The functional hole FH and/or the seating space Rp may be implemented simultaneously with the manufacture of the molded product P by substantially disposing a portion of the fifth core(s) 453 and/or the fourth core(s) 351 inside the second core 102 (e.g., inside the first sub-cavity 221a). However, the embodiment(s) of the disclosure are not limited thereto, and in removing burrs formed on the surface of the molded product during the molding process or implementing shapes and sizes according to design specifications, at least a portion of the functional hole FH and/or the seating space Rp may be completed by additional processing performed after extraction of the molded product P.

In the structure in which the fourth core(s) 351 and/or the fifth core(s) 453 of FIGS. 22 to 23 are at least partially disposed inside the first sub-cavity 221a, the operation of the fourth core(s) 351 and/or the fifth core(s) 453 entering or separating from the first sub-cavity 221a may be performed in the mold-closed state. For example, it may be set so that the fourth core(s) 351 and/or the fifth core(s) 453 enter the first sub-cavity 221a after the operation of the third core 103 coupling with the second core 102, and the fourth core(s) 351 and/or the fifth core(s) 453 may be set to first separate from the second core 102 before the third core 103 separates from the second core 102. For example, the transition between the mold-closed state and the mold-open state may be performed substantially with the fourth core(s) 351 and/or the fifth core(s) 453 separated from the second core 102.

As described above, the mold (e.g., the mold 100 of FIG. 1, FIG. 7 and/or FIG. 10) according to the embodiment(s) of the disclosure may facilitate separation or extraction of molded products including surfaces inclined or convex with respect to the separation direction by including a transformable core (e.g., the above-described second core (e.g., the second core 102 of FIGS. 1 to 6)). For example, even when the molded product includes inclined or convex curved surfaces, it may be manufactured and separated using molten materials without surface damage, thereby enhancing the defect rate. In an embodiment, since the number of cores for manufacturing molded products of such complex shapes may be decreased, equipment costs (e.g., mold manufacturing costs) or manufacturing costs and time associated with post-processing of molded products may be decreased.

The effects obtainable from the disclosure are not limited to the effects mentioned above, and other effects not mentioned are clearly understood by those having ordinary skill in the art to which the disclosure belongs from the description of the above-described embodiment(s).

According to an embodiment of the disclosure, a mold (e.g., the mold 100 of FIG. 1, FIG. 7 and/or FIG. 10) for manufacturing molded products using molten materials may include a first core (e.g., the first core 101 of FIGS. 1 to 3) configured to provide an accommodation space (e.g., the accommodation space 111 of FIG. 2) open on one surface, a second core (e.g., the second core 102 of FIGS. 1 to 6) at least partially accommodated in the accommodation space and disposed on the first core so as to reciprocate linearly along a first direction (e.g., the first direction D1 of FIG. 1), and a third core (e.g., the third core 103 of FIG. 1) moving in the first direction to be coupled to at least the second core out of the first core or the second core while facing the second core, wherein the third core is configured to combine with the second core to form a cavity corresponding to a shape of a product to be manufactured. In an embodiment, the second core may provide a first sub-cavity (e.g., the first sub-cavity 221a of FIG. 9) of a first shape corresponding to at least a portion of the cavity when accommodated in the accommodation space while being coupled with the third core, and may be configured to provide a second sub-cavity (e.g., the second sub-cavity 221a of FIG. 12) of a second shape different from the first shape while being at least partially retracted from the accommodation space when separated from the third core.

According to an embodiment, the second sub-cavity may be configured to provide a larger space than the first sub-cavity.

According to an embodiment, such a mold may further include a pressing member (e.g., the pressing member 119b of FIG. 2 or FIG. 3) disposed on the first core. In an embodiment, the pressing member may be configured to press the second core in a direction to be retracted from the accommodation space.

According to an embodiment, the pressing member may include at least one of a spring, a pneumatic cylinder, a hydraulic cylinder, or a motor.

According to an embodiment, such a mold may further include a locking bolt (e.g., the locking bolt 119a of FIG. 2 or FIG. 3) disposed on the first core. In an embodiment, the locking bolt may be bound to the second core and configured to set a gap or distance by which the second core is retracted from the accommodation space.

According to an embodiment, the second core may include a plurality of grooves (e.g., the groove(s) 127 of FIG. 5 or FIG. 6) provided on a surface facing the inner wall surface of the first core.

According to an embodiment, the second core may include a lubricating coating layer (e.g., the lubricating coating layer 129 of FIG. 6) provided on at least a portion of a surface facing the inner wall of the first core.

According to an embodiment, the second core may further include a base portion (e.g., the base portion 102a of FIG. 3 or FIG. 5) configured to provide a lower surface (e.g., the lower surface 121a of FIG. 2) of the first sub-cavity or the second sub-cavity, a frame-shaped sidewall structure (e.g., the sidewall structure 123 of FIGS. 2 to 6) protruding from an edge of the base portion and including an inner wall surface defining at least a portion of the first sub-cavity or the second sub-cavity, and at least one notch (e.g., the notch 125 of FIG. 2 or FIG. 4) provided on an outer wall surface of the sidewall structure. In an embodiment, a thickness (e.g., the first thickness T1 of FIG. 4) between the inner wall surface and the outer wall surface of the sidewall structure in a region where the notch is formed may be smaller than a thickness (e.g., the second thickness T2 of FIG. 4) between the inner wall surface and the outer wall surface of the sidewall structure in a region where the notch is not formed.

According to an embodiment, the second core may be configured to be accommodated in or retracted from the accommodation space by moving along the first direction. In this case, the outer wall surface of the sidewall structure may be provided inclined with respect to the first direction.

According to an embodiment, such a mold may further include a fourth core (e.g., the fourth core 351 of FIG. 21 or FIG. 22) slidably disposed on the first core. In an embodiment, it may be configured such that, with the third core coupled to the second core, the fourth core supports or maintains the second core to provide the first sub-cavity by pressing the sidewall structure.

According to an embodiment, when the third core is coupled with the second core, a portion of the fourth core may be configured to penetrate the sidewall structure and be disposed inside the cavity or the first sub-cavity.

According to an embodiment, the second core may further include at least one protrusion (e.g., the protrusion Rm of FIG. 17) formed on the inner wall surface of the sidewall structure.

According to an embodiment of the disclosure, a mold (e.g., the mold 100 of FIG. 1, FIG. 7 and/or FIG. 10) may include a first core (e.g., the first core 101 of FIGS. 1 to 3) providing an accommodation space (e.g., the accommodation space 111 of FIG. 2) open on one surface, a second core (e.g., the second core 102 of FIGS. 1 to 6) at least partially accommodated in the accommodation space and disposed to appear and disappear on one surface of the first core, a pressing member (e.g., the pressing member 119b of FIG. 2 or FIG. 3) disposed on the first core and configured to press the second core in a direction to be retracted from the accommodation space, and a third core (e.g., the third core 103 of FIG. 1) moving in a first direction (e.g., the first direction D1 of FIG. 1) to be coupled to at least the second core out of the first core or the second core while facing the second core, wherein the third core is configured to combine with the second core to form a cavity corresponding to the shape of the product. In an embodiment, the second core may be configured to provide a first sub-cavity (e.g., the first sub-cavity 221a of FIG. 9) corresponding to at least a portion of the cavity when accommodated in the accommodation space while being coupled with the third core, and to provide a second sub-cavity (e.g., the second sub-cavity 221a of FIG. 12) expanded relative to the first sub-cavity while being retracted by the pressing member from the accommodation space by a designated distance when separated from the third core.

According to an embodiment, the pressing member may include at least one of a spring, a pneumatic cylinder, a hydraulic cylinder, or a motor.

According to an embodiment, such a mold may further include a locking bolt (e.g., the locking bolt 119a of FIG. 2 or FIG. 3) disposed on the first core. In an embodiment, the locking bolt may be bound to the second core and configured to set a distance by which the second core is retracted from the accommodation space.

According to an embodiment, the second core may include a plurality of grooves (e.g., the groove(s) 127 of FIG. 5 or FIG. 6) provided on a surface facing the inner wall surface of the first core, and a lubricating coating layer (e.g., the lubricating coating layer 129 of FIG. 6) provided on at least a portion of a surface facing the inner wall surface of the accommodation space.

According to an embodiment, the second core may further include a base portion (e.g., the base portion 102a of FIG. 3 or FIG. 5) providing a lower surface (e.g., the lower surface 121a of FIG. 2) of the first sub-cavity or the second sub-cavity, a frame-shaped sidewall structure (e.g., the sidewall structure 123 of FIGS. 2 to 6) protruding from an edge of the base portion and providing an inner wall surface surrounding at least a portion of the first sub-cavity or the second sub-cavity, and at least one notch (e.g., the notch 125 of FIG. 2 or FIG. 4) provided on an outer wall surface of the sidewall structure. In an embodiment, a thickness (e.g., the first thickness T1 of FIG. 4) between the inner wall surface and the outer wall surface of the sidewall structure in a region where the notch is formed may be smaller than a thickness (e.g., the second thickness T2 of FIG. 4) between the inner wall surface and the outer wall surface of the sidewall structure in a region where the notch is not formed.

According to an embodiment, the second core may be accommodated in or retracted from the accommodation space by moving along the first direction. In this case, the outer wall surface of the sidewall structure may be provided inclined with respect to the first direction.

According to an embodiment, such a mold may further include a fourth core (e.g., the fourth core 351 of FIG. 21 or FIG. 22) slidably disposed on the first core. In an embodiment, with the third core coupled to the second core, a portion of the fourth core may be disposed inside the cavity or the first sub-cavity by penetrating the sidewall structure.

According to an embodiment, the second core may further include at least one protrusion (e.g., the protrusion Rm of FIG. 17) formed on the inner wall surface of the sidewall structure.

The disclosure has been described by way of illustration with respect to an embodiment, but it should be understood that the embodiment is for illustration and not limiting the disclosure. It is apparent to those skilled in the art that various changes in form and detailed configuration may be made without departing from the overall scope of the disclosure, including the appended claims and their equivalents.

## Claims

1. A mold (100) for manufacturing molded products using molten materials, comprising:
a first core (101) configured to provide an accommodation space (111) open on one surface thereof;
a second core (102) at least partially accommodated in the accommodation space and disposed on the first core so as to reciprocate linearly along a first direction (D1) ; and
a third core (103) moving in the first direction to be coupled to at least the second core out of the first core or the second core while facing the second core, wherein the third core is configured to combine with the second core to form a cavity corresponding to a shape of a product to be manufactured,
wherein the second core is configured to,
provide a first sub-cavity (221a) of a first shape corresponding to at least a part of the cavity when the second core is combined with the third core and accommodated in the accommodation space, and,
provide a second sub-cavity (221b) of a second shape different from the first shape when the second core is separated from the third core while being at least partially retracted from the accommodation space.

2. The mold of claim 1, wherein the second sub-cavity is configured to provide a space larger than a space provided by the first sub-cavity.

3. The mold of claim 1 or 2, further comprising:
a pressing member (119b) disposed on the first core,
wherein the pressing member is configured to press the second core in a direction in which the second core is retracted from the accommodation space.

4. The mold of claim 3, wherein the pressing member includes at least one of a spring, a pneumatic cylinder, a hydraulic cylinder, or a motor.

5. The mold of claim 3 or 4, further comprising:
a locking bolt (119a) disposed on the first core,
wherein the locking bolt is bound to the second core and configured to set a gap or a distance by which the second core is retracted from the accommodation space.

6. The mold of any one of claims 1 to 5, wherein the second core includes a plurality of grooves (127) provided on a surface facing an inner wall surface of the first core.

7. The mold of any one of claims 1 to 6, wherein the second core includes a lubricating coating layer (129) provided on at least a part of a surface facing an inner wall of the first core.

8. The mold of any one of claims 1 to 7, wherein the second core comprises:
a base portion (102a) configured to provide a bottom surface (121a) of the first sub-cavity or the second sub-cavity;
a frame-shaped sidewall structure (123) protruding from an edge of the base portion and including an inner wall surface defining at least a portion of the first sub-cavity or the second sub-cavity; and
at least one notch (125) provided on an outer wall surface of the sidewall structure,
wherein a thickness (T1) between the inner wall surface and the outer wall surface of the sidewall structure in a region where the notch is formed is smaller than a thickness (T2) between the inner wall surface and the outer wall surface of the sidewall structure in a region where the notch is not formed.

9. The mold of claim 8, wherein the second core is configured to move along the first direction to be accommodated in or retracted from the accommodation space, and
wherein the outer wall surface of the sidewall structure is provided to be inclined with respect to the first direction.

10. The mold of any one of claims 8 to 9, further comprising:
a fourth core (351) slidably disposed on the first core,
wherein the fourth core is configured to support or maintain the second core to provide the first sub-cavity by pressing the sidewall structure while the third core is coupled to the second core.

11. The mold of claim 10, wherein a part of the fourth core is configured to pass through the sidewall structure and to be disposed inside the cavity or the first sub-cavity when the third core is coupled with the second core.

12. The mold of any one of claims 8 to 11, wherein the second core further includes at least one protrusion (Rm) formed on the inner wall surface of the sidewall structure.

13. The mold of any one of claims 1 to 12, wherein the second core is configured to:
appear and disappear on one surface of the first core by reciprocating linearly along the first direction, and
when separated from the third core, provide the second sub-cavity (221b) expanded relative to the first sub-cavity while being retracted by the pressing member from the accommodation space by a designated distance.
